# EUROPÄISCHE PATENTSCHRIFT

(11) **EP 1 260 750 B1**
(45) Veröffentlichungstag und Bekanntmachung des Hinweises auf die Patenterteilung: **19.07.2006**
(21) Anmeldenummer: 02007808.5
(22) Anmeldetag: 06.04.2002
(51) Int. Cl.: F16L 19/028, F16L 19/02

(54) **Rohrverschraubung**
Threaded joint
Raccord vissé

(30) Priorität: 22.05.2001 DE 10124874
(43) Veröffentlichungstag der Anmeldung: 27.11.2002
(73) Patentinhaber: Voss Fluid GmbH + Co. KG, 51688 Wipperfürth (DE)
(72) Erfinder: Berghaus, Gerd, 51515 Kürten (DE)
(74) Vertreter: Patentanwälte Dr. Solf & Zapf

(56) Entgegenhaltungen:
- EP-A- 0 926 415
- DE-A- 3 824 777
- DE-A- 19 520 099
- DE-A- 19 546 104
- DE-A- 19 941 577
- GB-A- 272 071
- US-A- 2 867 463
- US-A- 4 150 847
- US-A- 5 109 888
- US-A- 5 192 095

## Beschreibung

Die vorliegende Erfindung betrifft eine Rohrverschraubung gemäß dem Oberbegriff des Patentanspruchs 1.

Rohrverschraubungen zum Anschluß von vorgefertigten, jeweils einen durch einen Stauch-Umformvorgang gebildeten Ringwulst aufweisenden Rohrleitungen sind in zahlreichen Ausführungen bekannt. Lediglich beispielsweise sei hier auf die Veröffentlichungen DE 195 20 099 C2, DE 195 26 316 C2 sowie EP 1 054 203 A1 hingewiesen. Bei solchen Rohrverschraubungen besteht der hauptsächliche Nachteil, dass während der Montage durch Verschrauben des Verschraubungsteils (Überwurfmutter) das Rohr zum Mitdrehen neigt. Bei zwei ähnlichen Rohrverschraubungen gemäß DE 195 11 063 C2 und DD 240 059 A1 wird das Rohr über zwei Konusflächen im Bereich des verformten Ringwulstes zwischen Stutzen und Überwurfmutter eingespannt . Bei den bekannten Anordnungen neigt das Rohr bei dynamischer Belastung unmittelbar hinter dem Ringwulst zum Bruch.

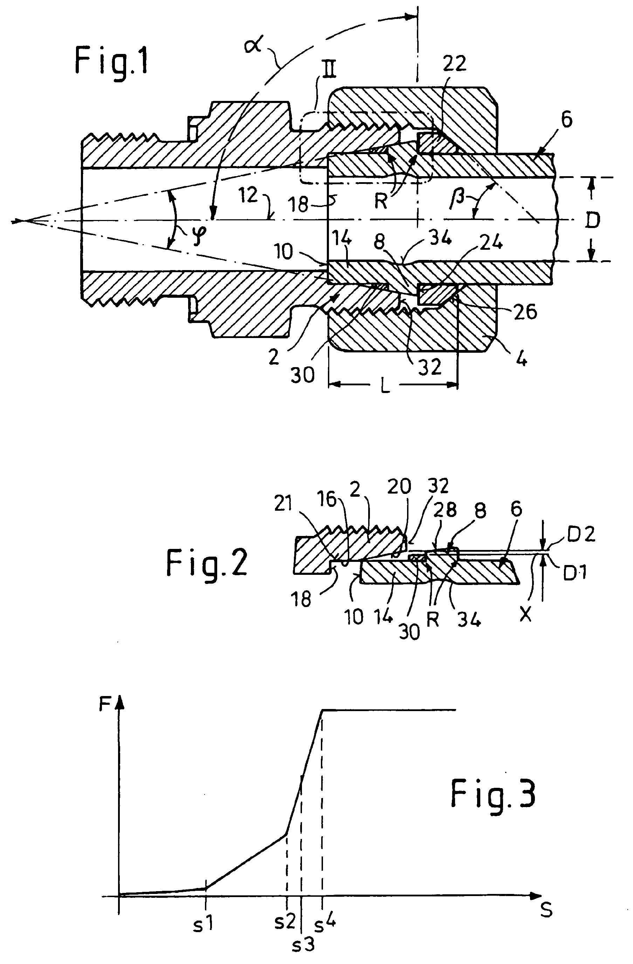

Aus der EP 0 926 415 A1 ist eine Rohrverschraubung (Rohrverbindung) der gattungsgemäßen, dem Oberbegriff des Anspruchs 1 entsprechenden Art bekannt. Dabei ist zur Vermeidung einer Mitdrehbewegung des Rohrs ein Stützring bzw. eine Stützhülse vorgesehen, der bzw. die zwischen der Überwurfmutter und dem umgeformten Ringwulst auf einem achsparallelen Rohrabschnitt sitzt und mit dem Ringwulst eine Anlagefläche bildet, welche zur Rohr- bzw. Verschraubungsachse einen Winkel zwischen 15° und 40° aufweisen soll. Zur Überwurfmutter hin soll insbesondere eine radiale, d. h. zur Achse rechtwinklig verlaufende Anlagefläche gebildet sein (Figuren 1 und 3); alternativ kann es sich in diesem Bereich auch um eine Konusanlage in einem Innenkonus der Überwurfmutter mit einem Winkel zur Rohrachse zwischen 45° und 70° handeln (Figur 2). Es hat sich gezeigt, dass auch diese bekannte, gattungsgemäße Rohrverbindung noch nicht sicher genug ein Mitdrehen des Rohres bei der Verschraubungsmontage ausschließt. Außerdem besteht auch hier eine recht hohe Bruchgefahr im Bereich des eingespannten Rohr-Ringwulstes.

Die DE 197 42 917 C1 beschreibt eine weitere ähnliche Rohr-Schraubverbindung, wobei das Rohr mit dem Ringwulst ebenfalls in einer kegeligen Fläche eines separaten Stützringes eingespannt gehalten ist. Dabei stützt sich aber der Stützring einseitig an der Überwurfmutter und anderseitig an der radialen Stirnfläche des Anschlußstutzens ab, wodurch eine starre Anzugsbegrenzung bewirkt wird.

Das Dokument GB-A-272 071 beschreibt eine nur auf den ersten Blick ähnliche Rohrverschraubung, bei der zwar ein Stützring (free washer) vorhanden ist, durch der aber das Rohr nicht radial eingespannt wird. Zudem fehlt auch eine axiale Abstützung einer Stirnfläche des Rohrs an einer radialen stufenfläche im Anschlußstutzen.

Die DE-A- 199 41 577 beschreibt eine Rohrverbindung, die gar Keinen Stützring aufweist. Das Rohr wird mit seinem umgeformten Rohrwulst direkt axial zwischen Stutzen und Überwurfmutter eingespannt, wobei die Überwurfmutter über eine innere Konusfläche auch eine radiale Kraft im Bereich des umgeformten Rohrwulstes erzeugt.

In dem Dokument DE-A-38 24 777 schließlich ist eine ganz andere Art einer Rohrverbindung offenbart, und zwar eine "O-Ring-Schaftdichtkegel-Rohrverbindung", wobei das Rohr Keinen umgeformten Ringwulst aufweist. Vielmehr ist als separates Teil ein sogenannter Schaftdichtkegel vorgesehen.

Der vorliegenden Erfindung liegt die Aufgabe zugrunde, ausgehend von dem beschriebenen Stand der Technik eine kostengünstige und montagesichere Rohrverschraubung zu schaffen, die eine hohe statische und dynamische Belastbarkeit gewährleistet sowie den beschriebenen Rohr-Mitdreheffekt praktisch eliminiert.

Erfindungsgemäß wird diese Aufgabe durch die Merkmale des unabhängigen Patentanspruchs 1 gelöst. Vorteilhafte Ausgestaltungsmerkmale sind in den abhängigen Ansprüchen enthalten.

Erfindungsgemäß bildet der Stützring mit dem Ringwulst der Rohrleitung eine zur Verschraubungsachse in einem Winkel deutlich größer 45° liegende Anlagefläche, und zwar beträgt dieser Winkel insbesondere 90°. Die Anlagefläche zwischen dem Stützring und dem Rohr-Ringwulst ist somit bevorzugt radial ausgerichtet, wodurch vorteilhafterweise in diesem umgeformten Ringwulst-Bereich beim Anziehen eine radiale Kraftkomponente gänzlich eliminiert ist. In Kombination damit ist es zudem vorteilhaft, wenn einerseits der Stützring mit dem Verschraubungsteil eine konische, zur Verschraubungsachse in einem Winkel etwa im Bereich um 45° liegende Anlagefläche bildet, und andererseits weist der Ringwulst der Rohrleitung einen Konusabschnitt zum Einsetzen in den Innenkonus des Anschlußstutzens auf, wobei der Konusabschnitt einen dem Innenkonus entsprechenden Konuswinkel von insbesondere 24° aufweist (Norm-Anschlußstutzen).

Die Erfindung basiert auf der Erkenntnis, dass bei dem beschriebenen Stand der Technik Rohrbrüche insbesondere darauf zurückzuführen sind, dass eine Einspannung gerade in dem umgeformten Wulstbereich und stets über Konusanlage erfolgt. Somit wirken von außen eingeleitete Momente und Kräfte ungedämpft auf den durch die Umformung kaltverfestigten und weniger elastischen Rohrbereich unmittelbar hinter dem Ringwulst. Gemäß EP 0 926 415 A1, Figur 2, wird das Rohr zwar auch im unverformten Bereich radial eingespannt, indem der Stützring über Konusanlage mit der Überwurfmutter zusammenwirkt, aber diese Radialkraft im unverformten Rohrbereich wird nachteilig durch die konische Anlage am Rohrwulst zumindest teilweise wieder aufgehoben. Bei dieser Ausführung kann ein Mitdrehen des Rohres bei der Montage nicht vermieden werden.

Durch die erfindungsgemäße Ausgestaltung wird eine sehr sichere Mitdreh-Vermeidung erreicht, da die Flächenpressung im Stutzen-Innenkonus größer als im Bereich der insbesondere radialen Anlagefläche zwischen Rohr-Ringwulst und Stützring ist. Beim Anziehen der Verschraubung wird somit der Stützring mit dem Verschraubungsteil relativ zu dem Anschlußstutzen und der nicht mitverdrehten Rohrleitung verdreht. Im Bereich der bevorzugt konischen Anlagefläche zwischen Stützring und Überwurf-Verschraubungsteil wird aber durch das feste Verschrauben eine radiale Verpressung des Stützrings bewirkt, was vorteilhafterweise zu einer festen, sicheren Einspannung des Rohrs gerade in dessen unverformtem, vom Ringwulst beabstandeten und daher nicht durch den Umformvorgang kaltverfestigten Rohrbereich führt. Dabei werden Rohrbrüche bei hohen dynamischen Belastungen vermieden, indem im Bereich der ringwulstseitigen, radialen Anlagefläche durch den erfindungsgemäß bevorzugten 90°-Winkel eine radiale, der Radialkraft an der anderen, konischen, verschraubungsteilseitigen Anlagefläche entgegenwirkende Kraftkomponente bewußt vermieden wird. Zudem wird schließlich durch die erfindungsgemäße radiale Anlagefläche zwischen Stützring und Rohr-Ringwulst auch eine Minimierung der Montagekraft aufgrund einer geringen Flächenpressung erreicht. Durch die Erfindung wird als Haupt-Vorteil somit eine hohe dynamische Belastbarkeit erreicht; es kann eine sogenannte Biegewechselfestigkeit im Bereich von 130 bis 140 N/mm² gewährleistet werden.

Der erfindungsgemäß erreichte Effekt kann in weiterer bevorzugter Ausgestaltung noch dadurch deutlich verbessert werden, dass der Stützring an einer Stelle seines Ringumfanges derart durch einen z.B. etwa radialen Schlitz unterbrochen ist, dass er radial mit relativ geringer Kraft elastisch oder plastisch verformbar, d. h. im Durchmesser insbesondere verengbar ist. Dadurch wird durch eine leichtere, mit geringer Kraft erreichbare Verformung des Stützringes, die über den konischen Anlagekontakt mit dem Verschraubungsteil verursacht wird, eine über den Umfang besonders gleichmäßige und dadurch sehr effektive radiale Rohreinspannung bewirkt.

Weitere vorteilhafte Ausgestaltungsmerkmale der Erfindung und dadurch erreichte Vorteile sind in den Unteransprüchen und der nachfolgenden Beschreibung enthalten.

Anhand von in der Zeichnung veranschaulichten, bevorzugten Ausführungsbeispielen soll die Erfindung genauer erläutert werden. Dabei zeigen:
- Fig. 1: einen Axialschnitt durch eine erste Ausführungsform einer erfindungsgemäßen Rohrverschraubung im verschraubten Montagezustand,
- Fig. 2: eine gesonderte Darstellung des Bereichs II in Fig. 1 in einem Zustand vor der Montage,
- Fig. 3: ein Kraft-/Weg-Diagramm zur Erläuterung des Montagevorgangs,
- Fig. 4: eine Ansicht wie in Fig. 1 in einer zweiten vorteilhaften Ausgestaltung der erfindungsgemäßen Rohrverschraubung,
- Fig. 5: eine Ansicht V-V gemäß Fig. 4 nur des Stützrings in der vorteilhaften Ausgestaltung und
- Fig. 6: einen Diametralschnitt des Stützrings in der Ebene VI-VI gemäß Fig. 5.

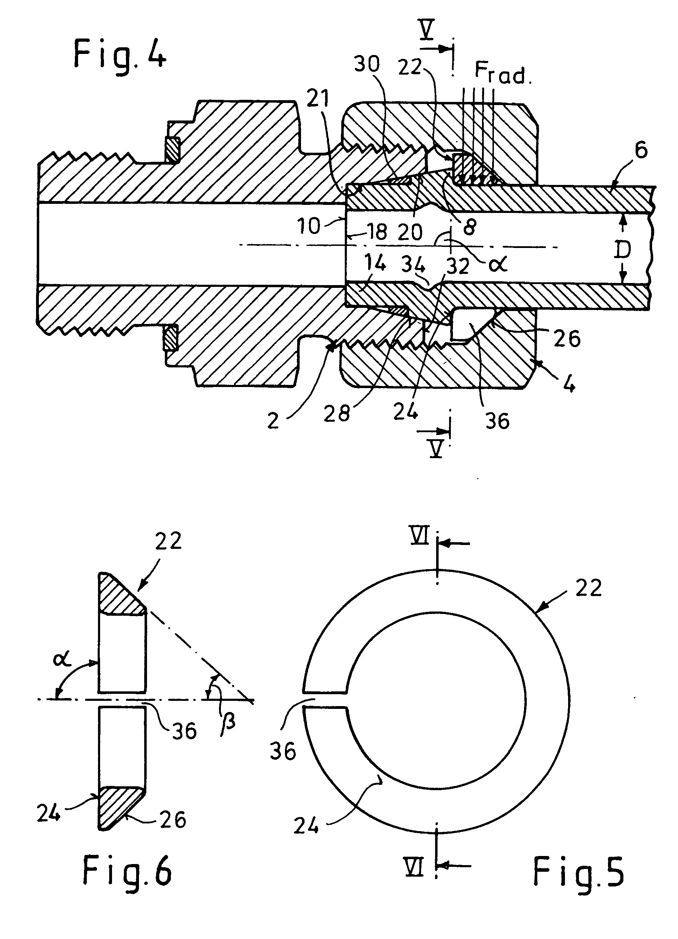

Wie sich zunächst aus Fig. 1 und 4 jeweils ergibt, besteht eine erfindungsgemäße Rohrverschraubung aus einem Anschlußstutzen 2 und einem Überwurf-Verschraubungsteil 4, welches üblicherweise als Überwurfmutter ausgebildet ist, die mit einem Innengewinde auf ein Außengewinde des Anschlußstutzens 2 aufschraubbar ist. Eine anzuschließende, insbesondere metallische Rohrleitung 6 weist an einem Anschlußende einen radial nach außen vorspringenden Ringwulst 8 auf, der durch einen plastischen Stauch-Umformvorgang gebildet ist. Zwischen dem Ringwulst 8 und einer endseitigen Stirnfläche 10 des Anschlußendes der Rohrleitung 6 ist ein hohlzylindrischer, zur Verschraubungsachse 12 paralleler (achsparalleler) Rohrendabschnitt 14 gebildet. Der Anschlußstutzen 2 weist eine Aufnahmeöffnung 16 (Fig. 2) mit einer radialen Stufenfläche 18 zur axialen Abstützung der Rohrleitung 6 durch Anlage der Stirnfläche 10 auf. Innerhalb der Aufnahmeöffnung 16 ist zudem ein Innenkonus 20 gebildet, der sich von der Stufenfläche 18 weg nach außen erweitert. Axial zwischen der Stufenfläche 18 und dem Innenkonus 20 ist eine zylindrische innere Übergangsfläche 21 gebildet, die einen Innendurchmesser aufweist, der etwa dem Außendurchmesser des Rohrendabschnittes 14 entspricht.

Zur Halterung der Rohrleitung 6 ist der Ringwulst 8 formschlüssig zwischen dem Anschlußstutzen 2 und einem zusätzlichen Stützring 22 einspannbar, wobei der Stützring 22 zwischen dem Ringwulst 8 und dem Verschraubungsteil 4 auf der Rohrleitung 6 sitzt.

Erfindungsgemäß bildet der Stützring 22 mit dem Ringwulst 8 eine Anlagefläche 24, die mit der Verschraubungsachse 12 einen Winkel α einschließt, der deutlich größer als 45° ist. In diesem Zusammenhang bedeutet "deutlich größer", dass der Winkel α mindestens etwa 80°, aber maximal etwa 100° beträgt, d. h. es soll sich zumindest annähernd um einen rechten Winkel handeln. In bevorzugter Ausgestaltung ist der Winkel α gleich 90°, so dass die Anlagefläche 24 radial, senkrecht zur Verschraubungsachse 12 ausgerichtet ist. Dieser Winkel α zwischen der Anlagefläche 24 und der Achse 12 wird auf der Seite des Rohr-Ringwulstes 8 gemessen, d. h. der Ringwulst 8 liegt innerhalb der den Winkel α begrenzenden Schenkel (24, 12), während der Stützring 22 außerhalb liegt (siehe Fig. 1, 4 und 6).

Auf der anderen Seite bildet der Stützring 22 mit dem Verschraubungsteil 4 bevorzugt eine konische Anlagefläche 26, die mit der Verschraubungsachse 12 auf der Seite des Stützrings 22 einen Winkel β etwa im Bereich um 45° einschließt. Zweckmäßigerweise handelt es sich bei dem Verschraubungsteil 4 um eine genormte Überwurfmutter, deren Innenkonus - Winkel 45° (=Halbwinkel; Konus-Vollwinkel=90°) beträgt, so dass dies entsprechend auch für den Winkel β gilt.

In weiterer vorteilhafter Ausgestaltung der Erfindung weist der Ringwulst 8 der Rohrleitung 6 im Anschluß an die Anlagefläche 24 einen sich in Richtung der endseitigen Stirnfläche 10 verjüngenden Konusabschnitt 28 zum teilweisen Einsetzen in den Innenkonus 20 des Anschlußstutzens 2 auf. Dazu weist der Konusabschnitt 28 einen entsprechenden Konuswinkel von insbesondere ϕ=24° auf (im Falle einer normgemäßen Ausgestaltung des Anschlußstutzens 2).

Im Übergangsbereich zwischen dem Konusabschnitt 28 und dem achsparallelen, die endseitige Stirnfläche 10 aufweisenden Rohrendabschnitt 14 ist vorteilhafterweise ein elastischer Dichtring 30 angeordnet. Für diesen Dichtring 30 ist zwischen der zylindrischen Außenfläche des Rohrendabschnittes 14 und einer angrenzenden, radialen Begrenzungsfläche des Ringwulstes 8 ein Aufnahmeraum gebildet. Wie sich aus Fig. 2 ergibt, weist der Dichtring 30 in einem vor der Rohrmontage unverformten, auf der Rohrleitung 6 sitzenden Zustand einen maximalen Außendurchmesser D1 auf, der kleiner als der größte Durchmesser D2 am Mündungsauslauf des Innenkonus 20 des Anschlußstutzens 2 ist. Daraus resultiert eine in Fig. 2 eingezeichnete Durchmesserdifferenz X. In Kombination damit weist der vorstehende zylindrische Rohrendabschnitt 14 einer derart bemessene Länge auf, dass er beim Einführen schon den Bereich des kleinsten Konus-Durchmessers im Übergang zu der zylindrischen Übergangsfläche 21 erreicht, bevor der Dichtring 30 in den Innenkonus 20 gelangt (siehe dazu Fig. 2). Dadurch ergibt sich vorteilhafterweise eine radiale Zentrierung, schon bevor die Dichtung 30 mit dem Innenkonus 20 in Berührung kommt. Durch diese Ausgestaltung werden vorteilhafterweise Beschädigungen des relativ weichen Dichtringes 30 beim Einsetzen in die Aufnahmeöffnung 16 bzw. den Innenkonus 20 vermieden (optimaler Schutz des Dichtrings bei der Montage). Der Dichtring 30 hat dabei einen z. B. etwa rechteckigen Ringquerschnitt (Fig. 2), der bereichsweise, insbesondere im in Richtung der Rohr-stirnfläche 10 weisenden Ringbereich, über eine gedachte, konische, durch den Konusabschnitt 28 definierte Hüllfläche vorspringt, um im Montagezustand nach Fig. 1 im Innenkonus 20 dichtend unter Vorspannung anzuliegen.

Wie sich aus der verschraubten Montagestellung in Fig. 1 und 4 ergibt, sind erfindungsgemäß sowohl die Rohrleitung 6 als auch der Stützring 22 bezüglich einer radialen endseitigen Stirnfläche 32 des Anschlußstutzens 2 anlagefrei. Dies bedeutet, dass die Rohrleitung 6 mit dem Anschlußstutzen 2 ausschließlich über die an der Stufenfläche 18 anliegende Stirnfläche 10 und über den im Innenkonus 20 sitzenden Konusabschnitt 28 in Anlageverbindung steht. Somit ist der Ringwulst 8 - ohne jeglichen Anlagekontakt an der Stutzen-Stirnfläche 32 - nur axial zwischen dem Innenkonus 20 und dem Stützring 22 eingespannt.

Hierbei ist das Anschlußende der Rohrleitung 6 in Anpassung an den - insbesondere normgemäßen - Anschlußstutzen 2 derart ausgelegt, dass bei der Rohrmontage durch Anziehen der Verschraubung zunächst eine Anlage des Konusabschnittes 28 in dem Stutzen-Innenkonus 20 und erst danach, und zwar nach einer elastischen radialen Aufweitung des Anschlußstutzens 2 bedingt durch die Konuswirkung, eine Anlage der Rohr-Stirnfläche 10 an der radialen Stufenfläche 18 im Anschlußstutzen 2 erfolgt. Dieser Verschraubungsvorgang ist in Fig. 3 anhand eines Kraft-/Wegdiagramms veranschaulicht. Zunächst kann mit geringer Kraft, z. B. manuell, das Verschraubungsteil 4 mit dem Anschlußstutzen 2 verschraubt werden, bis in einer ersten Stellung s1 der Konusabschnitt 28 im Stutzen-Innenkonus 20 zur Anlage gelangt. Daraus resultiert ein erster deutlicher Kraftanstieg, da der Anschlußstutzen 2 bei weiterem Verschrauben radial elastisch aufgeweitet wird, bis in einer zweiten Stellung s2 die Stirnfläche 10 zur Anlage auf der Stufenfläche 18 gelangt. Bei weitergehendem Anzug der Verschraubung tritt mit noch steilerer Kraftkennlinie eine elastische axiale Stauchung im Bereich der in Fig. 1 einzeichneten Einspannlänge L auf, weil erfindungsgemäß - wie oben bereits ausgeführt - bewußt auf eine weitere starre Anzugsbegrenzung durch Anlage an der Stutzen-Stirnfläche 32 verzichtet wurde. Die Soll-Verschraubungsendstellung s3 liegt gemäß Fig. 3 vor Beginn des plastischen Verformungsbereiches (s4).

Bezüglich des durch einen speziellen Stauch-Umformvorgang unter Verwendung eines geeigneten Werkzeuges gebildeten Ringwulstes 8 ist es noch von Vorteil, dass zwischen dem Ringwulst 8 und den angrenzenden, achsparallelen Rohrabschnitten abgerundete Übergänge gebildet sind, die in Fig. 1 und 2 jeweils mit R gekennzeichnet sind. Weiterhin ist es vorteilhaft, den formgebenden Stauchvorgang mit einem geringen Umformgrad (d. h. minimale radiale Erweiterung) derart durchzuführen, dass die Rohrleitung 6 auch im Bereich des Ringwulstes 8 eine nahezu zylindrische Innenfläche mit etwa dem ursprünglichen Rohr-Innendurchmesser D behält. Wie dargestellt kann in diesem Bereich allenfalls eine geringfügige innere rillenartige Ausbeulung 34 entstehen. Hierdurch werden im Rohrinneren Toträume minimiert, die Verwirbelungen in der Strömung verursachen könnten.

In den Fig. 4 bis 6 ist eine vorteilhafte Ausgestaltung der Erfindung veranschaulicht, wonach der Stützring 22 durch einen - hier beispielhaft radial verlaufenden - Schlitz 36 in seinem Umfangsverlauf an einer Stelle durchgehend unterbrochen ist. Durch diesen Schlitz 36 kann der Stützring 2 bezüglich seines Durchmessers insbesondere im elastischen Bereich, gegebenenfalls aber auch plastisch, mit geringer Kraft verformt, d. h. insbesondere verkleinert (verengt), aber natürlich auch vergrößert (aufgeweitet) werden. Durch die Verengbarkeit kann über die konische Anlagefläche 26 eine über den Ringumfang sehr gleichmäßige Radialkraft F_{rad} (siehe Fig. 4) zur effektiven radialen Rohreinspannung erzeugt werden.

Abschließend seien nochmals die wesentlichen Vorteile der vorliegenden Erfindung wie folgt zusammengefaßt:
- Große Einspannlänge L bzw. großer Hebelarm L zur Aufnahme von Biegewechselbelastungen
- Geringer Umformgrad bzw. geringe Kaltverfestigung der Rohrleitung; dadurch Reduzierung der Bruchgefahr sowie kleine Umformkräfte beim Anstauchen des Ringwulstes
- Federelastische axiale Vorspannung des eingespannten Anschlußendes nach Art eines Druckfederstabes zur Kompensation von Setzerscheinungen
- Primäre metallische Dichtung im Bereich der Rohr-Stirnfläche 10 zur Stutzen-Stufenfläche 18 hin; dadurch quasi statische Belastung der durch den elastischen Dichtring 30 gebildeten Sekundär-Weichdichtung
- Durch die spezielle Anordnung der Weichdichtung Vermeidung von Beschädigungen beim Einstecken in den Innenkonus
- Sichere Vermeidung eines Mitdrehens des Rohres bei der Montage, indem die Flächenpressung im Innenkonus 20 größer als im Bereich der Anlagefläche 24 zwischen Stützring 22 und Ringwulst 8 der Rohrleitung 6 ist und dadurch beim Anziehen der Verschraubung die Rohrleitung 6 im Anschlußstutzen 2 verdrehsicher sitzt, während der Stützring 22 sich mit dem Verschraubungsteil 4 auf der Rohrleitung 6 verdreht, bis er zusammen mit dem Rohr-Ringwulst 8 fest eingespannt ist.
- Sichere, spaltfreie Kammerung des Dichtrings 30 zur Vermeidung einer Spaltextrusion auch im Falle einer Untermontage bedingt durch die hohe Flächenpressung im Konusbereich
- Durch die erfindungsgemäßen Winkel α und β zwischen Stützring 22 und Ringwulst 8 bzw. Verschraubungsteil 4:
   - Festeinspannung der Rohrleitung in ihrem unverformten, nicht kaltverfestigten Rohrbereich, dadurch Vermeidung von Brüchen bei dynamischen Belastungen (durch den speziellen Winkel α=90° gibt es keine radiale Kraftkomponente, die der Radialkraft im Bereich der verschraubungsteilseitigen Anlagefläche 26 entgegenwirken könnte)
- Minimierung der erforderlichen Montagekraft durch geringe Flächenpressung im Bereich der Anlagefläche 24.
- Vermeidung von Kerbwirkungen durch die Verrundungen R und dadurch Vermeidung von Brüchen bei dynamischen Belastungen. Da im Rohr keine Querschnittsverengungen vorliegen und Toträume minimiert sind, ergibt sich ein glatter Strömungsbereich mit minimalem Druckverlust.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Rohrverschraubung mit einer anschließbaren, ein Anschlußende mit einem umgeformten Ringwulst (8) aufweisenden Rohrleitung (6), bestehend aus einem Anschlußstutzen (2) und einem zum abgedichteten Halten der Rohrleitung (6) mit dem Anschlußstutzen (2) verschraubbaren Überwurf-Verschraubungsteil (4), wobei der Anschlußstutzen (2) eine Aufnahmeöffnung (16) mit einer radialen Stufenfläche (18) zur axialen Abstützung einer Stirnfläche (10) der Rohrleitung (6) und mit einem sich von der Stufenfläche (18) weg nach außen erweiternden Innenkonus (20) aufweist, wobei die Rohrleitung (6) mit dem Ringwulst (8) formschlüssig zwischen dem Anschlußstutzen (2) und einem zwischen dem Ringwulst (8) und dem Überwurf-Verschraubungsteil (4) auf der Rohrleitung (6) sitzenden Stützring (22) einspannbar ist,
**dadurch gekennzeichnet, dass** der Stützring (22) derart mit dem Überwurf-Verschraubungsteil (4) eine konische, zur Verschraubungsachse (12) in einem Winkel (β) etwa im Bereich um 45° liegende Anlagefläche (26) bildet, dass in diesem Bereich eine radiale Rohr-Einspannung erreicht wird, und dass der Stützring (22) mit dem Ringwulst (8) eine zur Verschraubungsachse (12) derart in einem Winkel (α) deutlich größer 45° liegende Anlagefläche (24) bildet, dass dieser Bereich beim Anziehen der Verschraubung im Wesentlichen frei von radialen Kraftkomponenten ist, so dass nur eine radiale Verpressung des Stützringes (22) über die Anlagefläche (26) mit dem Überwurf-Verschaubungsteil (4) erfolgt und **dadurch** eine radiale Einspannung der Rohrleitung (6) gerade in deren unverformtem, von dem Ringwulst (8) beabstandeten Rohrbereich erreicht wird.

2. Rohrverschraubung nach Anspruch 1,
**dadurch gekennzeichnet, dass** der Winkel (α) der Anlagefläche (24) zwischen Stützring (22) und Rohr-Ringwulst (8) im Bereich von mindestens 80° bis maximal 100° liegt und insbesondere 90° beträgt.

3. Rohrverschraubung nach Anspruch 1 oder 2,
**dadurch gekennzeichnet, dass** der Stützring (22) derart durch einen Schlitz (36) in seinem Umfangsverlauf unterbrochen ist, dass er radial verformbar ist.

4. Rohrverschraubung nach einem der Ansprüche 1 bis 3,
**dadurch gekennzeichnet,dass** der Ringwulst (8) der Rohrleitung (6) einen Konusabschnitt (28) zum Einsetzen in den Innenkonus (20) des Anschlußstutzens (2) aufweist, wobei der Konusabschnitt (28) einen dem Innenkonus (20) entsprechenden Konuswinkel (ϕ) von insbesondere 24° aufweist.

5. Rohrverschraubung nach Anspruch 4,
**dadurch gekennzeichnet, dass** im Übergangsbereich zwischen dem Konusabschnitt (28) und einem achsparallelen, die endseitige Stirnfläche (10) aufweisenden Rohrendabschnitt (14) ein elastischer Dichtring (30) angeordnet ist.

6. Rohrverschraubung nach Anspruch 5,
**dadurch gekennzeichnet, dass** derDichtring(30)ineinem unverformt auf dem achsparallelen Rohrendabschnitt (14) der Rohrleitung (6) sitzenden Zustand einen maximalen Außendurchmesser (D1) aufweist, der kleiner als der größte Durchmesser (D2) am Mündungsauslauf des Innenkonus (20) des Anschlußstutzens (2) ist.

7. Rohrverschraubung nach einem der Ansprüche 1 bis 6,
**dadurch gekennzeichnet, dass** das Anschlußende der Rohrleitung (6) in Anpassung an den Anschlußstutzen (2) derart ausgelegt ist, dass bei der Rohrmontage durch Anziehen der Verschraubung zunächst eine Anlage des Konusabschnittes (28) in dem Stutzen-Innenkonus (20) und danach eine Anlage der Rohr-Stirnfläche (10) an der radialen Stufenfläche (18) im Anschlußstutzen (2) erfolgt.

8. Rohrverschraubung nach einem der Ansprüche 1 bis 7,
**dadurch gekennzeichnet, dass** die Rohrleitung (6) und der Stützring (22) im verschraubten Montagezustand bezüglich einer radialen Stirnfläche (32) des Anschlußstutzens (2) anlagefrei sind.

9. Rohrverschraubung nach einem der Ansprüche 1 bis 8,
**dadurch gekennzeichnet, dass** zwischendemRingwulst(8)und angrenzenden, insbesondere achsparallelen Rohrabschnitten abgerundete Übergänge (R) gebildet sind.

10. Rohrverschraubung nach einem der Ansprüche 1 bis 9,
**dadurch gekennzeichnet, dass** die Rohrleitung (6) im Bereich des Ringwulstes (8) derart durch einen formgebenden Stauchvorgang mit einem geringen Umformgrad plastisch umgeformt ist, dass die Rohrleitung (6) auch im Bereich des Ringwulstes (8) eine nahezu zylindrische Innenfläche - allenfalls mit einer geringfügigen inneren rillenartigen Ausbeulung (34) - aufweist.

## Claims

1. A threaded pipe joint with a connectable pipe (6) having a connection end with a circumferentially formed annular bead (8), comprising a connecting piece (2) and a threaded sleeve part (4) which can be screwed onto the connecting piece (2) in order to hold the pipe (6) in a sealed manner, wherein the connecting piece (2) has a receiving opening (16) with a radial step surface (18) for axially supporting an end surface (10) of the pipe (6) and with an inner cone (20) widening outwards away from the step surface (18), wherein the pipe (6) with the annular bead (8) can be positively clamped between the connecting piece (2) and a supporting ring (22) mounted on the pipe (6) between the annular bead (8) and the threaded sleeve part (4), **characterised in that** the supporting ring (22) and the threaded sleeve part (4) together form a conical contact surface (26) lying at an angle (β) in the region of 45° to the threaded-joint axis (12) so that the pipe is radially clamped in this region, and **in that** the supporting ring (22) and the annular bead (8) together form a contact surface (24) lying at an angle (α) distinctly greater than 45° to the threaded-joint axis (12) so that this region is substantially free of radial force components when the threaded joint is tightened, with the result that radial compression of the supporting ring (22) only takes place over the contact surface (26) by means of the threaded sleeve part (4) and, in this way, the pipe (6) is radially clamped in its undeformed pipe region spaced from the annular bead (8).

2. A threaded pipe joint according to claim 1, **characterised in that** the angle (α) of the contact surface (24) between the supporting ring (22) and the annular pipe bead (8) lies in the region of at least 80° up to a maximum of 100° and is especially 90°.

3. A threaded pipe joint according to claim 1 or 2, **characterised in that** the supporting ring (22) is interrupted by a slot (36) in its circumferential extent so that it is radially deformable.

4. A threaded pipe joint according to any one of claims 1 to 3, **characterised in that** the annular bead (8) of the pipe (6) has a conical portion (28) for insertion into the inner cone (20) of the connecting piece (2), wherein the conical portion (28) has a cone angle (ϕ), especially of 24°, corresponding to the inner cone (20).

5. A threaded pipe joint according to claim 4, **characterised in that** a resilient sealing ring (30) is arranged in the transition region between the conical portion (28) and an axially parallel pipe end portion (14) having the end surface (10).

6. A threaded pipe joint according to claim 5, **characterised in that**, in a state in which it sits undeformed on the axially parallel pipe end portion (14) of the pipe (6), the sealing ring (30) has a maximum outer diameter (D1) which is smaller than the greatest diameter (D2) at the mouth of the inner cone (20) of the connecting piece (2).

7. A threaded pipe joint according to any one of claims 1 to 6, **characterised in that** the connection end of the pipe (6) is adapted to the connecting piece (2) in such a way that, by tightening the threaded joint during assembly of the pipe, first the conical portion (28) is supported in the connecting-piece inner cone (20) and then the pipe end surface (10) is supported against the radial step surface (18) in the connecting piece (2).

8. A threaded pipe joint according to any one of claims 1 to 7, **characterised in that** the pipe (6) and the supporting ring (22) are contact-free in relation to a radial end surface (32) of the connecting piece (2) in the screwed-together assembled state.

9. A threaded pipe joint according to any one of claims 1 to 8, **characterised in that** rounded transitions (R) are formed between the annular bead (8) and adjacent, especially axially parallel pipe portions.

10. A threaded pipe joint according to any one of claims 1 to 9, **characterised in that** the pipe (6) is plastically deformed with a low degree of deformation in the region of the annular bead (8) by means of a shaping compression process in such a way that the pipe (6) also has a virtually cylindrical inner surface - at most with a slight, inner, groove-type indentation (34) - in the region of the annular bead (8).

## Revendications

1. Raccord vissé avec une conduite (6) raccordable, présentant une extrémité de branchement avec un renflement annulaire (8) reformé, comprenant une tubulure de branchement (2) et une partie de vissage à chapeau (4) pouvant être vissée pour le maintien étanchéifié de la conduite (6) avec la tubulure de branchement (2), la tubulure de branchement (2) présentant une ouverture de logement (16) avec une face à niveaux (18) radiale pour le soutien axial d'une face frontale (10) de la conduite (6) et avec un cône intérieur (20) s'élargissant vers l'extérieur à partir de la face à niveaux (18), la conduite (6) pouvant être serrée avec le renflement annulaire (8) par complémentarité de forme entre la tubulure de branchement (2) et une bague de soutien (22) située entre le renflement annulaire (8) et la partie de vissage à chapeau (4) sur la conduite (6),
**caractérisé en ce que** la bague de soutien (22) forme avec la partie de vissage à chapeau (4) une surface d'appui (26) conique, disposée dans un angle (α) à peu près dans la plage de 45° par rapport à l'axe de vissage (12) de telle sorte qu'un serrage de tube radial est obtenu dans cette zone et **en ce que** la bague de soutien (22) forme avec le renflement annulaire (8) une surface d'appui (24) située dans un angle (α) nettement supérieur à 45° par rapport à l'axe de vissage (12) de telle sorte que cette zone est sensiblement exempte de composantes de force radiales lors du serrage du vissage de telle sorte que seul un pressage radial de la bague de soutien (22) intervient par la surface d'appui (26) avec la partie de vissage à chapeau (4) et de ce fait un serrage radial de la conduite (6) est obtenu précisément dans sa zone tubulaire non déformée et espacée du renflement annulaire.

2. Raccord vissé selon la revendication 1,
**caractérisé en ce que** l'angle (α) de la surface d'appui (24) entre la bague de soutien (22) et le renflement annulaire de tube (8) se situe dans la plage d'au moins 80° à 100° maximum et s'élève en particulier à 90°.

3. Raccord vissé selon la revendication 1 ou 2,
**caractérisé en ce que** la bague de soutien (22) est interrompue par une fente (36) dans son tracé périphérique de telle sorte qu'elle peut être déformée radialement.

4. Raccord vissé selon l'une quelconque des revendications 1 à 3,
**caractérisé en ce que** le renflement annulaire (8) de la conduite (6) présente une section conique (28) pour l'insertion dans le cône intérieur (20) de la tubulure de branchement (2), la section conique (28) présentant un angle de cône (ϕ) correspondant au cône intérieur (20) qui est en particulier de 24°.

5. Raccord vissé selon la revendication 4,
**caractérisé en ce qu'**une bague d'étanchéité (30) élastique est disposée dans la zone de transition entre la section conique (28) et une section d'extrémité de tube (14) parallèle à l'axe et présentant la face frontale (10) côté extrémité.

6. Raccord vissé selon la revendication 5,
**caractérisé en ce que** la bague d'étanchéité (30) présente dans un état, situé de façon non déformée sur la section d'extrémité de tube (14) parallèle à l'axe de la conduite (6) un diamètre extérieur (D1) maximum qui est inférieur au plus grand diamètre (D2) à la sortie de l'orifice du cône intérieur (20) de la tubulure de branchement (2).

7. Raccord vissé selon l'une quelconque des revendications 1 à 6,
**caractérisé en ce que** l'extrémité de branchement de la conduite (6) est conçue par adaptation à la tubulure de branchement (2) de telle sorte que, lors du montage du tube, on obtient par le serrage du vissage d'abord un appui de la section conique (28) dans le cône intérieur de tubulure (20) et ensuite un appui de la face frontale du tube (10) sur la face à niveaux (18) radiale dans le tubulure de branchement (2).

8. Raccord vissé selon l'une quelconque des revendications 1 à 7,
**caractérisé en ce que** la conduite (6) et la bague de soutien (22) sont exemptes d'appui dans l'état de montage vissé par rapport à une face frontale (32) radiale de la tubulure de branchement (2).

9. Raccord vissé selon l'une quelconque des revendications 1 à 8,
**caractérisé en ce que** des transitions (R) arrondies sont formées entre le renflement annulaire (8) et des sections de tube contiguës, en particulier parallèles à l'axe.

10. Raccord vissé selon l'une quelconque des revendications 1 à 9,
**caractérisé en ce que** la conduite (6) est reformée plastiquement dans la zone du renflement annulaire (8) par une opération de refoulement de formage avec un faible degré de formage de telle sorte que la conduite (6) présente même dans la zone du renflement annulaire (8) une surface intérieure pratiquement cylindrique, dans tous les cas avec une légère partie bosselée (34) intérieure de type cannelure.
